(19) **Europäisches Patentamt**
**European Patent Office**
**Office européen des brevets**

(11) **EP 3 853 681 B1**

(12) **EUROPÄISCHE PATENTSCHRIFT**

(45) Veröffentlichungstag und Bekanntmachung des Hinweises auf die Patenterteilung:
**25.06.2025 Patentblatt 2025/26**

(21) Anmeldenummer: **19765721.6**

(22) Anmeldetag: **06.09.2019**

(51) Internationale Patentklassifikation (IPC):
**G05D 1/00** (2024.01)   **B60W 50/14** (2020.01)
**B60W 60/00** (2020.01)

(52) Gemeinsame Patentklassifikation (CPC):
**G05D 1/0061; B60W 50/14; B60W 60/0053;**
**G06V 20/597; B60W 2040/0872; B60W 2540/045;**
B60W 2540/22; B60W 2540/225; G06V 20/64

(86) Internationale Anmeldenummer:
**PCT/EP2019/073885**

(87) Internationale Veröffentlichungsnummer:
**WO 2020/058006 (26.03.2020 Gazette 2020/13)**

(54) **VERFAHREN ZUM KLASSIFIZIEREN EINER FAHRAUFGABENFREMDEN AKTIVITÄT EINES FAHRERS HINSICHTLICH EINER UNTERBRECHBARKEIT DER FAHRAUFGABENFREMDEN AKTIVITÄT BEI EINER ÜBERNAHMEAUFFORDERUNG DER FAHRAUFGABE UND VERFAHREN ZUR WIEDERFREIGABE EINER FAHRAUFGABENFREMDEN AKTIVITÄT NACH EINER UNTERBRECHUNG DER FAHRAUFGABENFREMDEN AKTIVITÄT AUFGRUND EINER ÜBERNAHMEAUFFORDERUNG DER FAHRAUFGABE**

METHOD FOR CLASSIFYING A NON-DRIVING ACTIVITY OF A DRIVER IN RESPECT OF AN INTERRUPTIBILITY OF THE NON-DRIVING ACTIVITY IN THE EVENT OF A PROMPT TO TAKE OVER THE DRIVING FUNCTION, AND METHOD FOR RE-RELEASING A NON-DRIVING ACTIVITY FOLLOWING AN INTERRUPTION OF SAID NON-DRIVING ACTIVITY AS A RESULT OF A PROMPT TO TAKEOVER THE DRIVING FUNCTION

PROCÉDÉ DE CLASSIFICATION D'UNE ACTIVITÉ D'UN CONDUCTEUR ÉTRANGÈRE À UNE TÂCHE DE CONDUITE EN CE QUI CONCERNE UNE INTERRUPTIBILITÉ DE L'ACTIVITÉ ÉTRANGÈRE À UNE TÂCHE DE CONDUITE DANS LE CAS D'UNE DEMANDE DE PRISE EN CHARGE DE LA TÂCHE DE CONDUITE ET PROCÉDÉ DE RÉAUTORISATION D'UNE ACTIVITÉ ÉTRANGÈRE À UNE TÂCHE DE CONDUITE APRÈS UNE INTERRUPTION DE L'ACTIVITÉ ÉTRANGÈRE À UNE TÂCHE DE CONDUITE EN RAISON D'UNE DEMANDE DE PRISE EN CHARGE DE LA TÂCHE DE CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2018 DE 102018215969**

(43) Veröffentlichungstag der Anmeldung:
**28.07.2021 Patentblatt 2021/30**

(73) Patentinhaber: **Robert Bosch GmbH**
**70442 Stuttgart (DE)**

(72) Erfinder:
• **MIRAMO, Jihad**
**70469 Stuttgart (DE)**
• **BIEG, Hans-Joachim**
**71093 Weil Im Schoenbuch (DE)**

(56) Entgegenhaltungen:
**WO-A1-2017/118789      DE-A1- 102015 201 369**
**US-B1- 9 690 292**

EP 3 853 681 B1

**Beschreibung**

Stand der Technik

Die Erfindung geht von einer Vorrichtung oder einem Verfahren nach Gattung der unabhängigen Ansprüche aus. Gegenstand der vorliegenden Erfindung ist auch ein Computerprogramm.

Um eine Sicherheit von automatisiert und/oder hochautomatisiert fahrenden Fahrzeugen zu gewährleisten, können Fahrzeuginnenraumsensoren, wie beispielsweise Fahrzeuginsassenüberwachungskameras, eingesetzt werden. Diese Überwachungskameras können beispielsweise die Kopf- und/oder Blickrichtung eines Fahrzeuginsassen erfassen, dessen Handgesten verfolgen sowie dessen Körperhaltung analysieren.

Die Druckschrift US 9 690 292 B1 offenbart Vorrichtungen, Systeme und Verfahren für den Übergang zwischen autonomen und manuellen Betriebsarten von Fahrzeugen.

Die Druckschrift WO 2017/118789 A1 offenbart ein Verfahren zur Steuerung eines automatischen Fahrer-Assistenzsystems eines Kraftfahrzeugs.

Offenbarung der Erfindung

Vor diesem Hintergrund werden mit dem hier vorgestellten Ansatz ein Verfahren zum Klassifizieren einer fahraufgabenfremden Aktivität eines Fahrers hinsichtlich einer Unterbrechbarkeit der fahraufgabenfremden Aktivität bei einer Übernahmeaufforderung der Fahraufgabe, ein Verfahren zur Wiederfreigabe einer fahraufgabenfremden Aktivität nach einer Unterbrechung der fahraufgabenfremden Aktivität aufgrund einer Übernahmeaufforderung der Fahraufgabe, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Der hier vorgestellte Ansatz beruht auf der Tatsache, dass eine Ausübung einer fahraufgabenfremden Aktivität durch einen Fahrer eines Fahrzeugs hinsichtlich eines Unterbrechbarkeitslevels dieser Aktivität klassifiziert werden kann, um eine potenzielle Ablenkungsgefahr des Fahrers aufgrund der fahraufgabenfremden Aktivität zu berechnen. Darüber hinaus kann der hier vorgestellte Ansatz einer Wiederfreigabe der fahraufgabenfremden Aktivität nach einer Unterbrechung dieser, beispielsweise aufgrund einer Übernahmeaufforderung der Fahraufgabe, dienen.

Es wird ein Verfahren zum Klassifizieren einer fahraufgabenfremden Aktivität eines Fahrers hinsichtlich einer Unterbrechbarkeit der fahraufgabenfremden Aktivität bei einer Übernahmeaufforderung der Fahraufgabe vorgestellt, wobei das Verfahren die folgenden Schritte aufweist:

Einlesen eines Detektionssignals und eines ersten Positionssignals von einer Fahrzeuginsassenüberwachungseinrichtung eines Fahrzeugs, wobei das Detektionssignal ein detektiertes Objekt repräsentiert, das einer fahraufgabenfremden Aktivität des Fahrers dient, und wobei das erste Positionssignal eine erste Position des detektierten Objekts repräsentiert;

Empfangen eines Übernahmeaufforderungssignals, wobei das Übernahmeaufforderungssignal eine Aufforderung des Fahrers zur Übernahme der Fahraufgabe repräsentiert;

Ermitteln einer zweiten Position des detektierten Objekts unter Verwendung eines zweiten Positionssignals, wobei das das zweite Positionssignal eine endgültige Position des Objekts repräsentiert, bevor der Fahrer die Fahraufgabe übernimmt und die fahraufgabenfremde Aktivität unterbricht; und

Bestimmen eines Unterbrechbarkeitslevels in Hinblick auf eine Unterbrechbarkeit der fahraufgabenfremden Aktivität, wobei der Unterbrechbarkeitslevel einen Grad einer visuellen und/oder kognitiven Vereinnahmung des Fahrers durch die fahraufgabenfremde Aktivität repräsentiert.

Bei einer fahraufgabenfremden Aktivität kann es sich um eine Tätigkeit handeln, die beispielsweise von einem Fahrer eines Fahrzeugs neben dem Steuern des Fahrzeugs und/oder der Bedienung fahrzeugeigener Geräte ausgeführt wird. So kann es sich bei einer fahraufgabenfremden Aktivität implizit um Essen, Trinken oder Rauchen handeln. Darüber hinaus kann es sich bei einer fahraufgabenfremden Aktivität insbesondere um eine Beschäftigung des Fahrers mit modernen Informations- und Kommunikationstechniken, wie beispielsweise Mobiltelefone, handeln, die eine Ablenkung des Fahrers, beispielsweise durch soziale Interaktionen und/oder spielerische Betätigungen, bedeuten können. Unter einer Unterbrechbarkeit kann eine Eigenschaft einer fahraufgabenfremden Aktivität verstanden werden, die angibt, dass die fahraufgabenfremde Aktivität noch nicht zu Ende geführt ist und vorübergehend bzw. bis zu einem vorbestimmten Zeitpunkt auch nicht mehr weitergeführt wird. Bei einer Fahraufgabe kann es sich um die Bedienung der Lenkung, des Antriebs, der Bremse und, je nach Ausrüstung, weiterer Komponenten eines Fahrzeugs handeln. Bereits heute kann der Fahrer eines Fahrzeugs bei der Ausführung der Fahraufgabe durch zahlreiche Fahrerassistenzsysteme unterstützt werden. Künftig ist mit einer noch weitreichenderen Automatisierung von Fahrzeugen, bis hin zur Vollautomatisierung, zu rechnen. Beim automatisierten und/oder hochautomatisierten Fahren kann der Fahrer zur Übernahme der Fahraufgabe aufgefordert werden, was insbesondere dann der Fall sein kann, wenn das automatisierte und/oder hochautomatisierte Fahrzeug mit einer Verkehrssituation konfrontiert ist, die nicht durch das System selbst lösbar ist. Bei einer Fahrzeuginsassenüberwachungseinrichtung kann es sich um eine optischsensorische Vorrichtung zum Überwachen einer Belegung eines Fahrzeugs handeln. So kann es sich bei einer Fahrzeuginsassenüberwachungseinrichtung beispielsweise um Kameras, zumeist Infrarotkameras, und/oder 3D-Sensoren handeln, die insbesondere einen Fahrer des Fahrzeugs überwachen und dadurch eine Aufmerksamkeit des Fahrers erfassen können, wodurch eine Verkehrssicherheit erhöht werden kann. Unter einem Objekt kann beispielsweise ein Gegenstand verstanden werden, mit dem eine fahraufgabenfremde Aktivität durch den Fahrer eines Fahrzeugs ausgeführt werden kann. So kann es sich bei einem Objekt zur Ausführung fahraufgabenfremder Aktivitäten insbesondere um ein Mobiltelefon handeln.

Angesichts der fortschreitenden technischen Entwicklungen und Neuerungen im Bereich des automatisierten und/oder autonomen Fahrens werden sich die Fahrgäste solch automatisierter und/oder autonomer Fahrzeuge zunehmend mit fahraufgabenfremden Aktivitäten beschäftigen. In den Automatisierungsstufen zwei, drei und vier, also vom teilautomatisierten Fahren bis zum hochautomatisierten Fahren, könnte der Fahrer in kritischen Verkehrssituationen vom Fahrzeug aufgefordert werden, die Verantwortung für das Fahren zu übernehmen. Hierbei haben diverse Studien eine Tendenz offenbart, dass der Fahrer die unterbrochene fahraufgabenfremde Aktivität wieder aufnimmt, nachdem er oder sie die Fahraufgabe erfolgreich übernommen hat. Dies zeigt, dass die meisten Fahrer zumindest kognitiv, oftmals aber auch visuell, durch die fahraufgabenfremde Aktivität vereinnahmt sind, wodurch eine Qualität einer manuellen Fahrt und somit eine generelle Verkehrssicherheit negativ beeinflusst werden kann.

Zahlreiche Studien konzentrieren sich auf die Fähigkeit des Fahrers, die Kontrolle über das Fahrzeug innerhalb eines definierten Zeitfensters sicher und komfortabel in Abhängigkeit der Art der fahraufgabenfremden Aktivität zu übernehmen. Die Ausführung fahraufgabenfremder Aktivitäten während eines automatisierten Fahrmodus eines Fahrzeugs hat gezeigt, dass diese Aktivitäten den Fahrer mental, kognitiv sowie auch visuell beeinflussen, selbst nachdem die Fahrer die Steuerung des Fahrzeugs erfolgreich übernommen haben. Dieser Umstand kann zu einem verringerten Aufmerksamkeitsniveau während der manuellen Fahrt und somit zu einer erhöhten Unfallgefahr führen.

Die Vorteile des hier vorgestellten Ansatzes liegen somit insbesondere darin, einem Fahrer dabei zu unterstützen, sich nach einer Übernahmeaufforderung der Fahraufgabe auf die manuelle Fahrt zu konzentrieren, indem fahraufgabenfremde Aktivitäten berücksichtigt und entsprechend gesteuert werden. Hierbei kann ein Ziel des hier vorgestellten Ansatzes insbesondere darin bestehen, zunächst die Art der fahraufgabenfremden Aktivität zu identifizieren, die von dem Fahrer vor der Übernahmeanforderung unterbrochen wurde, und daraufhin dem Fahrer effizient und sicher zu ermöglichen, seine unterbrochenen Aktivitäten später wiederaufzunehmen. Ferner kann mittels des hier vorgestellten Ansatzes eine Wahrscheinlichkeit einer Ablenkung des Fahrers durch die fahraufgabenfremde Aktivität während der manuellen Fahrt des Fahrzeugs, nach einer Übernahmeanforderung der Fahraufgabe, durch ein Bestimmen eines Unterbrechbarkeitslevels der fahraufgabenfremden Aktivität getroffen werden.

Gemäß einer Ausführungsform kann im Schritt des Ermittelns einer endgültigen Position des Objekts, bevor der Fahrer die Fahraufgabe übernimmt und die fahraufgabenfremde Aktivität unterbricht, die endgültige Position des Objekts einen Interessenbereich definieren, wobei der Schritt des Einlesens und/oder der Schritt des Ermittelns unter Verwendung des definierten Interessenbereichs ausgeführt wird. Eine solche Ausführungsform des hier vorgestellten Ansatzes bietet den Vorteil, dass eine Klassifizierung einer potenziellen Ablenkungsquelle während der manuellen Fahrt des Fahrzeugs erleichtert werden kann, indem ein Interessenbereich in Bezug auf die fahraufgabenfremde Aktivität bzw. die Ablenkungsquelle definiert wird, die vor der Übernahmeaufforderung der Fahraufgabe ermittelt wurde. Um hierbei fahraufgabenfremde Aktivitäten zu erkennen und zu identifizieren, können Computervisionsverfahren und/oder maschinelle Lernverfahren auf die ermittelten Sensordaten der Fahrzeuginsassenüberwachungseinrichtung angewendet werden. Verschiedene Aufgaben können hierbei beispielsweise von Experten trainiert und vom System gelernt werden.

Gemäß einer weiteren Ausführungsform kann im Schritt des Einlesens ferner ein erstes Blickrichtungssignal eingelesen werden, wobei das erste Blickrichtungssignal eine erste Blick- und/oder Kopfrichtung des Fahrers repräsentiert, wobei im Schritt des Ermittelns eine zweite Blick- und/oder Kopfrichtung des Fahrers in Bezug zu dem definierten Interessenbereich unter Verwendung eines zweiten Blickrichtungssignals ermittelt wird, wobei das zweite Blickrichtungssignal eine Ablenkung des Fahrers durch das Objekt in dem definierten Interessenbereich repräsentiert. Eine solche Ausführungsform des hier vorgestellten Ansatzes bietet den Vorteil, dass die Blickrichtung des Fahrers und/oder die Kopfausrichtung des Fahrers als ein Prädikator für die Ablenkung des Fahrers verwendet werden kann. Die Distraktionsklassifizierung basiert hierbei auf der Bestimmung der Blick- und/oder Kopfrichtung des Fahrers relativ zu dem definierten Interessenbereichen, der entweder für das sichere Fahren relevant oder eben nicht relevant ist.

Ferner kann gemäß einer Ausführungsform im Schritt des Einlesens das Detektionssignal und/oder das erste Positionssignal und/oder das erste Blickrichtungssignal von einer Kameraeinheit eingelesen werden, wobei im Schritt des Ermittelns das zweite Positionssignal und/oder das zweite Blickrichtungssignal ebenfalls von der Kameraeinheit eingelesen wird. Eine solche Ausführungsform des hier vorgestellten Ansatzes bietet den Vorteil, dass unter Verwendung zumindest einer oder einer Mehrzahl von Kameraeinheiten, oder auch 3D-Sensoreinrichtungen, fahraufgabenfremde Aktivitäten erfasst und in verschiedene Unterbrechbarkeitslevel eingeteilt werden können.

Gemäß der Erfindung wird im Schritt des Bestimmens des Unterbrechbarkeitslevels der Unterbrechbarkeitslevel unter Verwendung eines mathematischen Modells bestimmt. In einer weiteren Ausführungsform des Verfahrens kann der Unterbrechbarkeitslevel eine Unterbrechbarkeit der fahraufgabenfremden Aktivität von einer Leichtunterbrechungsstufe, die eine leichte Unterbrechbarkeit der fahraufgabenfremden Aktivität repräsentiert, bis zu einer Schwerunterbrechbarkeitsstufe, die eine schwere Unterbrechbarkeit der fahraufgabenfremden Aktivität repräsentiert, definieren. Wenn der Fahrer beispielsweise ein Spiel auf seinem Mobiltelefon spielt und das aktuelle Spiel pausiert, bevor er das Mobiltelefon zur Seite legt und die Fahraufgabe übernimmt, wird diese unterbrochene fahraufgabenfremde Aktivität als leicht unterbrechbar betrachtet, da der Fahrer das Spiel zu einem späteren Zeitpunkt wieder aufnehmen kann, ohne einen erzielten Fortschritt zu verlieren. Wenn jedoch der Fahrer beispielsweise eine Textnachricht auf seinem Mobiltelefon schrieb, als die Übernahmeaufforderung der Fahraufgabe erfolgte, hat der Fahrer eventuell nicht genug Zeit, um die Konversation ordnungsgemäß zu beenden. In diesem Fall wird die Aufgabe als schwer unterbrechbar betrachtet und es wird erwartet, dass der Fahrer zumindest kognitiv, möglicherweise aber auch visuell, davon abgelenkt wird.

Die Erfindung bietet somit den Vorteil, dass unter Verwendung des bestimmten Unterbrechbarkeitslevels einer fahraufgabenfremden Aktivität eine Wahrscheinlichkeit einer Ablenkung des Fahrers durch die fahraufgabenfremde Aktivität berechnet wird.

Darüber hinaus weist das Verfahren gemäß der Erfindung einen Schritt des Berechnens auf, bei dem eine Wahrscheinlichkeit einer Ablenkung des Fahrers durch die klassifizierte fahraufgabenfremde Aktivität berechnet wird, wobei die Wahrscheinlichkeit unter Verwendung einer vorherigen Wahrscheinlichkeit basierend auf dem bestimmten Unterbrechbarkeitslevel der fahraufgabenfremde Aktivität, bevor der Fahrer die Fahraufgabe übernahm, sowie einer Analyse der Blick- und/oder Kopfrichtung des Fahrers, nachdem der Fahrer die Fahraufgabe übernommen hat, berechnet wird. Die Erfindung bietet hierbei den Vorteil, dass der Unterbrechbarkeitslevel der fahraufgabenfremden Aktivität verwendet wird, um unter Verwendung einer früheren Wahrscheinlichkeit zu beurteilen, in welchem Ausmaß der Fahrer nach der Übernahmeaufforderung der Fahraufgabe abgelenkt sein wird.

Gemäß einer weiteren Ausführungsform kann der Schritt des Einlesens und/oder der Schritt des Empfangens und/oder der Schritt des Ermittelns und/oder der Schritt des Bestimmens und/oder der Schritt des Berechnens auf einer fahrzeugexternen Recheneinheit und/oder auf einer im Fahrzeug verbauten Recheneinheit ausgeführt werden, insbesondere wobei der Schritt des Einlesens und/oder der Schritt des Ermittelns wiederholt ausgeführt wird. Bei einer fahrzeugexternen Recheneinheit kann es sich beispielsweise um eine Cloud handeln, auf der Daten verschiedener Server gesammelt werden und online von jedem Ort aus wieder abrufbar sind. Eine solche Ausführungsform des hier vorgestellten Ansatzes bietet den Vorteil, dass eine Aufbereitung von Daten in der fahrzeugexternen Recheneinheit einen geringeren Rechenbedarf im Fahrzeug selbst bedeutet und einen damit verbundenen geringeren Energieverbrauch oder die Möglichkeit, Ressourcen für andere Funktionen zu nutzen, ermöglicht. Außerdem verfügt die fahrzeugexterne Recheneinheit über eine größere verfügbare Rechenleistung als ein fahrzeuginterner Computer. Eine solche Ausführungsform des hier vorgestellten Ansatzes bietet ferner den Vorteil, dass bei einer wiederholten Ausführung der Schritte des Einlesens und/oder des Ermittelns die Klassifizierung einer fahraufgabenfremden Aktivität plausibilisiert werden kann und zudem die Berechnung einer Wahrscheinlichkeit einer Ablenkung des Fahrers durch die klassifizierte fahraufgabenfremde Aktivität berechnet werden kann.

Hierbei kann gemäß einer Ausführungsform zwischen den wiederholt ausgeführten Schritten des Einlesens und/oder des Ermittelns die Wahrscheinlichkeit der Ablenkung des Fahrers durch die klassifizierte fahraufgabenfremde Aktivität berechnet werden. Eine solche Ausführungsform des hier vorgestellten Ansatzes bietet den Vorteil, dass eine Genauigkeit einer Klassifikation der fahraufgabenfremden Aktivität unter Verwendung einer vorausgehen Wahrscheinlichkeit einer Ablenkung des Fahrers sowie der berechneten Wahrscheinlichkeit der Ablenkung des Fahrers verbessert werden kann.

Es wird ein Verfahren zur Wiederfreigabe einer fahraufgabenfremden Aktivität nach einer Unterbrechung der fahraufgabenfremden Aktivität aufgrund einer Übernahmeaufforderung der Fahraufgabe vorgestellt, wobei das Verfahren die folgenden Schritte aufweist:

die Schritte entsprechend einem Verfahren zum Klassifizieren einer fahraufgabenfremden Aktivität eines Fahrers hinsichtlich einer Unterbrechbarkeit der fahraufgabenfremden Aktivität bei einer Übernahmeaufforderung der Fahraufgabe; und

Ausgeben eines Informationssignals, wobei das Informationssignal eine Information zu einer zeitlichen und/oder lokalen Wiederfreigabe der fahraufgabenfremden Aktivität repräsentiert.

Gemäß einer Ausführungsform kann im Schritt des Ausgebens unter Verwendung des Informationssignals ferner eine Wiederfreigabe einer fahraufgabenfremden Aktivität bereits während der manuellen Fahrt des Fahrzeugs in einem alternativen Ausführungsmodus ermöglicht werden. Um eine Ablenkung des Fahrers durch eine fahraufgabenfremde Aktivität, die als schwierig zu unterbrechen gilt, nach der Übernahmeaufforderung zu verhindern, kann das System dem Fahrer somit Informationen über die nächste verfügbare Gelegenheit zur Wiederfreigabe der fahraufgabenfremden Aktivität anbieten. So könnte eine solche Information beispielsweise auf einer Anzeigeeinrichtung des Fahrzeugs angezeigt werden. In Abhängigkeit eines Unterbrechbarkeitslevels der fahraufgabenfremden Aktivität kann das System darüber hinaus beispielsweise die Möglichkeit bieten, die fahraufgabenfremde Aktivität während der manuellen Fahrt unter Verwendung des alternativen Ausführungsmodus, beispielsweise akustisch anstatt visuell, wieder wiederfreizugeben. Zum Beispiel ist das Schreiben einer Textnachricht im SAE-Level drei und vier erlaubt, da dem Fahrer ein bestimmtes Zeitfenster garantiert wird, um die Fahraufgabe sicher und komfortabel zu übernehmen. Während der manuellen Fahrt, die auf die Übernahmeaufforderung folgt, darf der Fahrer jedoch keine Textnachricht schreiben, da die Texterstellung eine visuelle Aktivität ist. Wenn das Fahrzeug mit einer Spracherkennung ausgestattet ist und mit dem Mobiltelefon des Fahrers beispielsweise mittels Bluetooth verbunden ist, kann das System dem Fahrer die Möglichkeit bieten, die Person, mit der der Fahrer getextet hat, vor der Übernahmeaufforderung zu informieren und das Schreiben der Textnachricht fortzusetzen, indem die Textnachricht mithilfe der Spracherkennung diktiert wird. Eine solche Ausführungsform des hier vorgestellten Ansatzes bietet somit den Vorteil, dass der Fahrer sich unter Berücksichtigung der fahraufgabenfremden Aktivität auf die manuelle Fahrt konzentrieren kann, da die Wiederfreigabe der fahraufgabenfremden Aktivität entsprechend gesteuert werden kann.

Eines oder mehrere der hier vorgestellten Verfahren kann/können beispielsweise in Software oder Hardware oder in einer Mischform aus Software und Hardware beispielsweise in einer Vorrichtung oder einem Steuergerät implementiert sein.

Der hier vorgestellte Ansatz schafft ferner eine Vorrichtung, die ausgebildet ist, um die Schritte eines der hier vorgestellten Verfahren in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuerund/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:

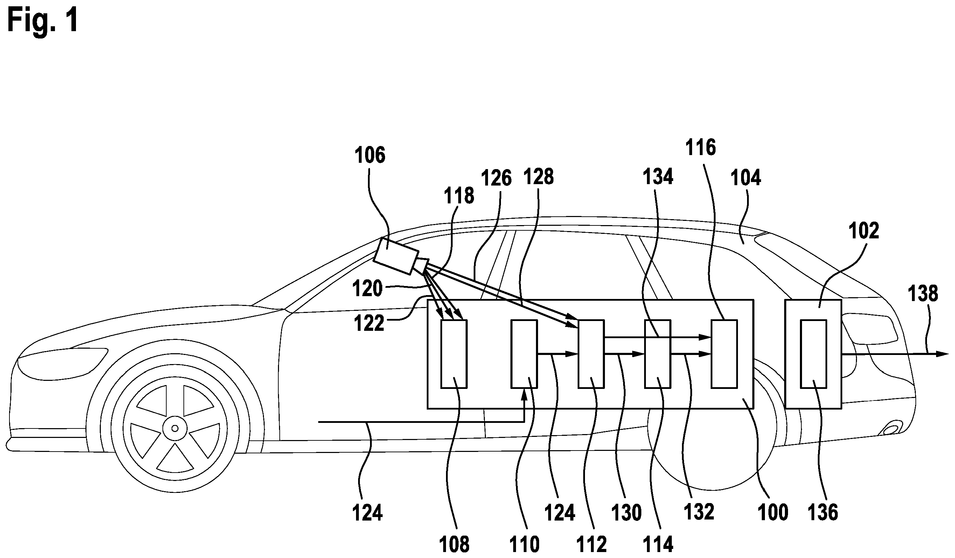

Fig. 1 ein Blockschaltbild einer Vorrichtung zum Klassifizieren einer fahraufgabenfremden Aktivität eines Fahrers hinsichtlich einer Unterbrechbarkeit der fahraufgabenfremden Aktivität bei einer Übernahmeaufforderung der Fahraufgabe sowie einer Vorrichtung zur Wiederfreigabe einer fahraufgabenfremden Aktivität nach einer Unterbrechung der fahraufgabenfremden Aktivität aufgrund einer Übernahmeaufforderung der Fahraufgabe gemäß einem Ausführungsbeispiel;

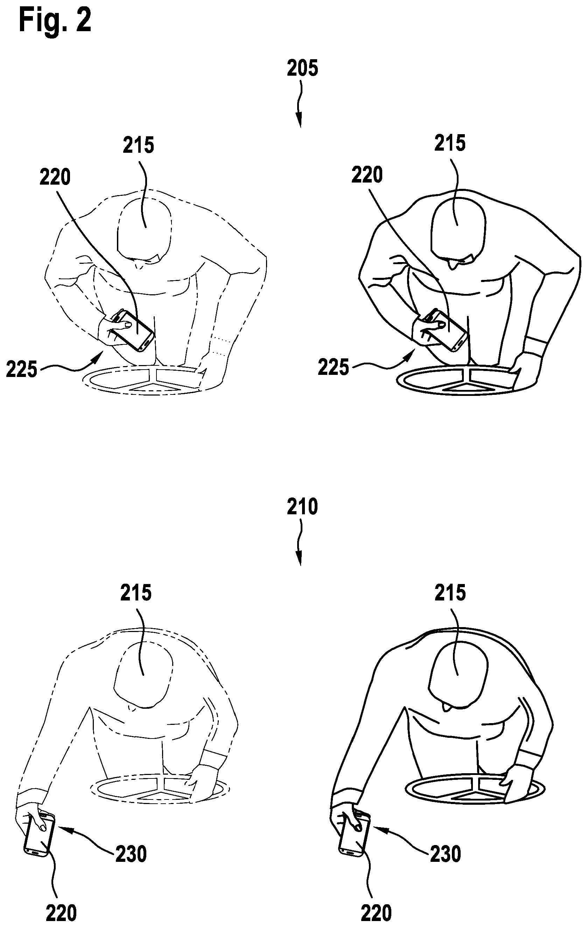

Fig. 2 eine schematische Ansicht einer Innenraumsituation eines Fahrzeugs zur Verwendung eines Verfahrens zum Klassifizieren einer fahraufgabenfremden Aktivität eines Fahrers hinsichtlich einer Unterbrechbarkeit der fahraufgabenfremden Aktivität bei einer Übernahmeaufforderung der Fahraufgabe gemäß einem Ausführungsbeispiel;

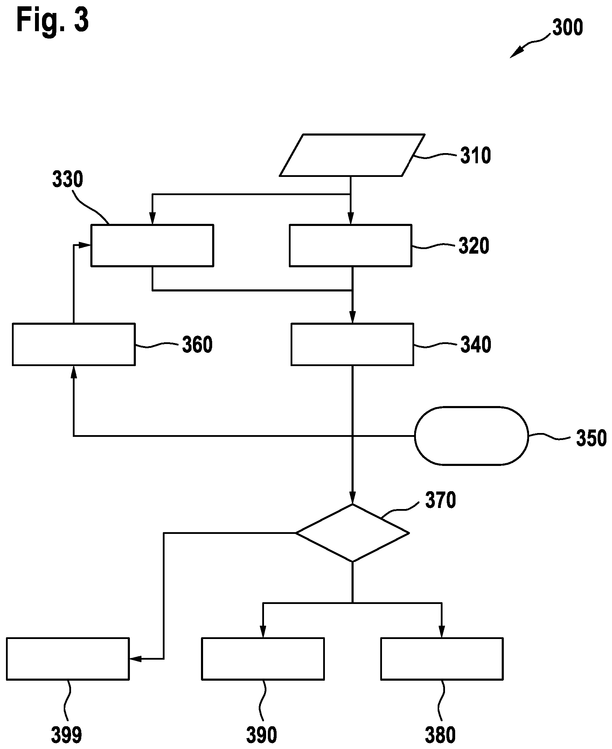

Fig. 3 ein Flussdiagramm eines Ausführungsbeispiels eines Verfahrens zum Klassifizieren einer fahraufgabenfremden Aktivität eines Fahrers hinsichtlich einer Unterbrechbarkeit der fahraufgabenfremden Aktivität bei einer Übernahmeaufforderung der Fahraufgabe sowie ein anschließendes Verfahren zur Wiederfreigabe einer fahraufgabenfremden Aktivität nach einer Unterbrechung der fahraufgabenfremden Aktivität aufgrund einer Übernahmeaufforderung der Fahraufgabe gemäß einem Ausführungsbeispiel; und

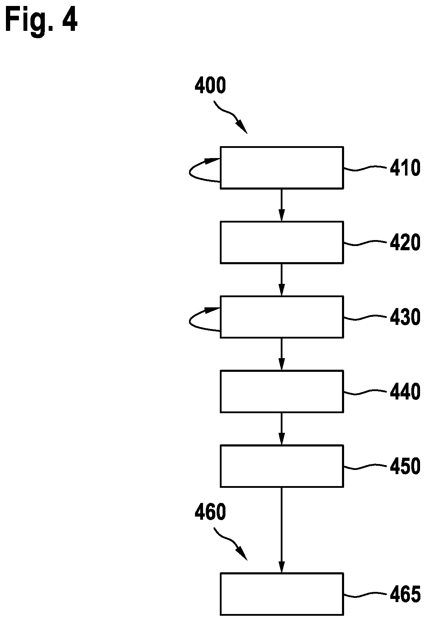

Fig. 4 ein Ablaufdiagramm eines Ausführungsbeispiels eines Verfahrens zum Klassifizieren einer fahraufgabenfremden Aktivität eines Fahrers hinsichtlich einer Unterbrechbarkeit der fahraufgabenfremden Aktivität bei einer Übernahmeaufforderung der Fahraufgabe sowie ein anschließendes Verfahren zur Wiederfreigabe einer fahraufgabenfremden Aktivität nach einer Unterbrechung der fahraufgabenfremden Aktivität aufgrund einer Übernahmeaufforderung der Fahraufgabe gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Fig. 1 zeigt ein Blockschaltbild einer Vorrichtung 100 zum Klassifizieren einer fahraufgabenfremden Aktivität eines Fahrers hinsichtlich einer Unterbrechbarkeit der fahraufgabenfremden Aktivität bei einer Übernahmeaufforderung der Fahraufgabe sowie einer Vorrichtung 102 zur Wiederfreigabe einer fahraufgabenfremden Aktivität nach einer Unterbrechung der fahraufgabenfremden Aktivität aufgrund einer Übernahmeaufforderung der Fahraufgabe gemäß einem Ausführungsbeispiel. Hierbei sind die Vorrichtungen 100 und 102 gemäß einem Ausführungsbeispiel auf einem Fahrzeug 104 angeordnet, wobei es sich bei dem Fahrzeug 104 beispielhaft um ein hochautomatisiert fahrendes Fahrzeug 104 handelt. Zusätzlich oder alternativ kann die Vorrichtung 100 und/oder die Vorrichtung 102 auch auf einer fahrzeugexternen Recheneinheit angeordnet sein.

Das Fahrzeug 104 weist gemäß einem Ausführungsbeispiel zumindest eine Fahrzeuginsassenüberwachungseinrichtung 106 zur optisch-sensorischen Überwachung einer Belegung des Fahrzeugs 104 auf, wobei es sich bei der Fahrzeuginsassenüberwachungseinrichtung 106 beispielhaft um eine Kameraeinheit 106 handelt, die in einem Innenraum des Fahrzeugs 104 angeordnet sein kann.

Die Vorrichtung 100 weist gemäß einem Ausführungsbeispiel eine Einleseeinheit 108, eine Empfangseinheit 110, eine Ermittlungseinheit 112, eine Bestimmeinheit 114 sowie eine Berechnungseinheit 116 auf. Hierbei ist die Einleseeinheit 108 beispielhaft ausgebildet, ein Detektionssignal 118 und ein erstes Positionssignal 120 von der Fahrzeuginsassenüberwachungseinrichtung 106 des Fahrzeugs 104 einzulesen, wobei das Detektionssignal 118 ein detektiertes Objekt repräsentiert, das einer fahraufgabenfremden Aktivität des Fahrers dient, und wobei das erste Positionssignal 120 eine erste Position des detektierten Objekts repräsentiert. Die Einleseeinheit 108 ist beispielhaft ferner ausgebildet, ein erstes Blickrichtungssignal 122 von der Fahrzeuginsassenüberwachungseinrichtung 106 einzulesen, wobei das erste Blickrichtungssignal 122 eine erste Blickund/oder Kopfrichtung des Fahrers repräsentiert. Gemäß einem Ausführungsbeispiel ist die Einleseeinheit 108 hierbei ausgebildet, das Detektionssignal 118, das erste Positionssignal 120 sowie das erste Blickrichtungssignal 122 wiederholt einzulesen.

Die Empfangseinheit 110 ist beispielhaft während eines automatisierten und/oder hochautomatisierten Fahrvorgangs des Fahrzeugs 104 ausgebildet, ein Übernahmeaufforderungssignal 124 zu empfangen, wobei das Übernahmeaufforderungssignal 124 eine Aufforderung des Fahrers zur Übernahme der Fahraufgabe repräsentiert. Eine Übernahmeaufforderung der Fahraufgabe kann beispielsweise dann erfolgen, wenn das hochautomatisierte Fahrzeug 104 mit einer Verkehrssituation konfrontiert ist, die nicht durch das System selbst lösbar ist, wobei der Fahrer die Fahraufgabe rechtzeitig und komfortabel übernehmen können sollte.

Ansprechend auf das empfangene Übernahmeaufforderungssignal 124 ist die Ermittlungseinheit 112 gemäß einem Ausführungsbeispiel ausgebildet, eine zweite Position des detektierten Objekts unter Verwendung eines zweiten Positionssignals 126 von der Fahrzeuginsassenüberwachungseinrichtung 106 zu empfangen, wobei das zweite Positionssignal 126 eine endgültige Position des Objekts repräsentiert, bevor der Fahrer die Fahraufgabe übernimmt und die fahraufgabenfremde Aktivität somit unterbrochen wird. Hierbei ist die Ermittlungseinheit 112 beispielhaft ferner ausgebildet, unter Verwendung der endgültigen Position des Objekts, bevor der Fahrer die Fahraufgabe übernimmt und die fahraufgabenfremde Aktivität unterbricht, einen Interessenbereich zu definieren. Darüber hinaus ist die Ermittlungseinheit 112 ausgebildet, eine zweite Blickund/oder Kopfrichtung des Fahrers in Bezug zu dem definierten Interessenbereich unter Verwendung eines zweiten Blickrichtungssignals 128 von der Fahrzeuginsassenüberwachungseinrichtung 106 zu ermitteln, wobei das zweite Blickrichtungssignal 128 hierbei eine Ablenkung des Fahrers durch das Objekt in dem definierten Interessenbereich repräsentiert. Gemäß einem Ausführungsbeispiel ist die Ermittlungseinheit 112 hierbei ausgebildet, das zweite Positionssignal 126 sowie das zweite Blickrichtungssignal 128 wiederholt zu ermitteln.

Die Bestimmeinheit 114 ist folglich gemäß einem Ausführungsbeispiel ausgebildet, unter Verwendung eines von der Ermittlungseinheit 112 bereitgestellten Klassifizierungssignals 130, das die klassifizierte fahraufgabenfremde Aktivität repräsentiert, einen Unterbrechbarkeitslevel 132 in Hinblick auf eine Unterbrechbarkeit der fahraufgabenfremden Aktivität zu bestimmen, wobei der Unterbrechbarkeitslevel 132 einen Grad einer visuellen und/oder kognitiven Vereinnahmung des Fahrers durch die fahraufgabenfremde Aktivität repräsentiert. Hierbei wird der Unterbrechbarkeitslevel 132 beispielhaft unter Verwendung eines mathematischen Modells bestimmt, wobei mittels des Unterbrechbarkeitslevels 132 eine Unterbrechbarkeit der fahraufgabenfremden Aktivität definiert wird, die von einer Leichtunterbrechungsstufe, die eine leichte Unterbrechbarkeit der fahraufgabenfremden Aktivität repräsentiert, bis zu einer Schwerunterbrechbarkeitsstufe, die eine schwere Unterbrechbarkeit der fahraufgabenfremden Aktivität repräsentiert, reicht.

Gemäß der Erfindung ee ist die Berechnungseinheit 116 ausgebildet, eine Wahrscheinlichkeit einer Ablenkung des Fahrers durch die klassifizierte fahraufgabenfremde Aktivität zu berechnen, wobei die Wahrscheinlichkeit unter Verwendung einer vorherigen Wahrscheinlichkeit basierend auf dem bestimmten Unterbrechbarkeitslevel 132 der fahraufgabenfremden Aktivität, bevor der Fahrer die Fahraufgabe übernahm, sowie einer Analyse der Blick- und/oder Kopfrichtung des Fahrers, nachdem der Fahrer die Fahraufgabe übernommen hat, mittels eines von der Ermittlungseinheit 112 bereitgestellten Analysesignals 134, berechnet wird. Hierbei kann die vorherige Wahrscheinlichkeit basierend auf dem bestimmten Unterbrechbarkeitslevel 132 der fahraufgabenfremden Aktivität, bevor der Fahrer die Fahraufgabe übernahm, mit dem Formelzeichen $P(D_T)$ bezeichnet werden und die Analyse der Blick- und/oder Kopfrichtung des Fahrers, nachdem der Fahrer die Fahraufgabe übernommen hat, mit dem Formelzeichen $P(b|D_T)$ bezeichnet werden. Zur Berechnung der Wahrscheinlichkeit der Ablenkung des Fahrers durch die klassifizierte fahraufgabenfremde Aktivität ergibt sich somit beispielhaft die folgende Formel:

$$P(D|b) \approx P(b|D_T)\, P(D_T)$$

Hierbei repräsentiert $P$ die Wahrscheinlichkeit, $D$ die Wahrscheinlichkeit der Ablenkung des Fahrers, $D_T$ die Ablenkung des Fahrers durch die fahraufgabenfremde Aktivität und $b$ das beobachtete Fahrerverhalten, insbesondre eine Blick- und/oder Kopfrichtung des Fahrers.

Die Vorrichtung 102 weist gemäß einem Ausführungsbeispiel eine Ausgabeeinheit 136 auf, wobei die Ausgabeeinheit 136 beispielhaft ausgebildet ist, ein Informationssignal 138 auszugeben, wobei das Informationssignal 138 eine Information zu einer zeitlichen und/oder lokalen Wiederfreigabe der fahraufgabenfremden Aktivität repräsentiert. Hierbei ist die Ausgabeeinheit 136 gemäß einem Ausführungsbeispiel ferner ausgebildet, unter Verwendung des Informationssignals 138 eine Wiederfreigabe einer fahraufgabenfremden Aktivität bereits während der manuellen Fahrt des Fahrzeugs 104 in einem alternativen Ausführungsmodus, beispielsweise akustisch statt visuell, zu ermöglichen.

Fig. 2 zeigt eine schematische Ansicht einer Innenraumsituation eines Fahrzeugs zur Verwendung eines Verfahrens zum Klassifizieren einer fahraufgabenfremden Aktivität eines Fahrers hinsichtlich einer Unterbrechbarkeit der fahraufgabenfremden Aktivität bei einer Übernahmeaufforderung der Fahraufgabe gemäß einem Ausführungsbeispiel.

Hierbei zeigen die erste 205 und die zweite 210 Ansicht je eine Draufsicht eines Fahrzeuginsassen 215, beispielhaft eines Lkw-Fahrers 215, der ein Objekt 220 in der Hand hält, aus der Perspektive einer Kameraeinheit, die beispielhaft an der Decke der Lkw-Kabine angeordnet ist. Die erste 205 und die zweite 210 Ansicht wurden beispielhaft an zwei verschiedenen Zeitpunkten von der Kameraeinheit aufgenommen, wobei die zweite Ansicht 210 zu einem späteren Zeitpunkt, beispielsweise nach Empfang einer Übernahmeaufforderung der Fahraufgabe, aufgenommen wurde, als die erste Ansicht 205.

Gemäß einem Ausführungsbeispiel zeigt die linke Seite der Ansichten 205 und 210 je ein Konfidenzniveau der Pixeltiefenschätzung und die rechte Seite der Ansichten 205 und 210 zeigt je die entsprechenden Infrarotbilder aus derselben Perspektive. Hierbei wird in der ersten Ansicht 205 unter Verwendung der Kameraeinheit das Objekt 220 an einer ersten Position 225 in der Hand des Fahrers 215 detektiert und als Mobiltelefon 220 klassifiziert, bevor die Übernahmeaufforderung der Fahraufgabe empfangen wird. Die Kameraeinheit verfolgt das Objekt 220 nun zu seiner endgültigen Position 230, wo der Fahrer 215 das Mobiltelefon 220 ablegt, um die Steuerung des Lenkrads zu übernehmen.

Die endgültige Position 230 definiert hierbei einen Interessenbereich 230, der nun berücksichtigt werden kann, um eine Wahrscheinlichkeit abzuschätzen, dass der Fahrer 215 durch eine mit dem Mobiltelefon 220 zusammenhängende fahraufgabenfremde Aufgabe, die den Interessenbereich 230 betrifft, abgelenkt wird, indem die Blick- und/oder die Kopfrichtung des Fahrers 215 relativ zu diesem Interessenbereich 230 ausgewertet wird. Wenn der Fahrer 215 beispielsweise häufig in die Richtung des Interessenbereichs 230 blickt, klassifiziert das System den Fahrer 215 als durch das Objekt 220 abgelenkt.

Fig. 3 zeigt ein Flussdiagramm 300 eines Ausführungsbeispiels eines Verfahrens zum Klassifizieren einer fahraufgabenfremden Aktivität eines Fahrers hinsichtlich einer Unterbrechbarkeit der fahraufgabenfremden Aktivität bei einer Übernahmeaufforderung der Fahraufgabe sowie ein anschließendes Verfahren zur Wiederfreigabe einer fahraufgabenfremden Aktivität nach einer Unterbrechung der fahraufgabenfremden Aktivität aufgrund einer Übernahmeaufforderung der Fahraufgabe gemäß einem Ausführungsbeispiel.

Gemäß einem Ausführungsbeispiel weist das Flussdiagramm 300 zunächst einen Datenausgabeprozess 310 auf, wobei die Daten zu einem detektierten Objekt, einer Position des Objekts und/oder einer Blick- und/oder Kopfrichtung des Fahrers von einer Kameraeinheit, die in einem Innenraum des Fahrzeugs angeordnet ist und einer optisch-sensorischen Erfassung des Innenraums sowie der Belegung des Fahrzeugs dient, erfasst und an eine Vorrichtung zum Klassifizieren einer fahraufgabenfremden Aktivität eines Fahrers hinsichtlich einer Unterbrechbarkeit der fahraufgabenfremden Aktivität bei einer Übernahmeaufforderung der Fahraufgabe ausgesendet werden.

In einem darauffolgenden Prozessschritt 320 wird das von der Kameraeinheit detektierte Objekt sowie eine Position des Objekts optisch-sensorisch durch die Kameraeinheit weiterverfolgt. Parallel dazu wird in einem Prozessschritt 330 die Blick- und/oder Kopfrichtung des Fahrers von der Kameraeinheit optisch-sensorisch weiterverfolgt.

Unter Verwendung der ermittelten Positionen des Objekts und/oder der ermittelten Blick- und/oder Kopfrichtungen des Fahrers wird gemäß der Erfindung in einem Prozessschritt 340 eine fahraufgabenfremde Aktivität des Fahrers mit großer Sicherheit klassifiziert.

Der Anfangspunkt 350 repräsentiert eine Aufforderung des Fahrers zur Übernahme der Fahraufgabe. Dies kann beispielsweise dann der Fall sein, wenn das automatisierte und/oder hochautomatisierte Fahrzeug mit einer Verkehrssituation konfrontiert ist, die nicht durch das System selbst lösbar ist, wobei der Fahrer die Fahraufgabe rechtzeitig und komfortabel übernehmen können sollte.

Daraufhin wird in einem Prozessschritt 360 unter Verwendung einer endgültigen Position des Objekts, bevor der Fahrer die Fahraufgabe übernimmt und die fahraufgabenfremde Aktivität unterbricht, ein Interessenbereich an dieser endgültigen Position definiert. Hierbei wird unter Verwendung des definierten Interessenbereichs der Prozessschritt 330 wiederholt ausgeführt und die Blickund/oder Kopfrichtung des Fahrers in Bezug zu dem definierten Interessenbereich verfolgt, wobei nun eine Ablenkung des Fahrers durch das Objekt in dem definierten Interessenbereich erkannt wird.

In einem Entscheidungsprozess 370 wird anhand eines Unterbrechbarkeitslevels der fahraufgabenfremden Aktivität, wobei der Unterbrechbarkeitslevel unter Verwendung eines mathematischen Modells bestimmt wird, entschieden, ob die fahraufgabenfremde Aktivität leicht unterbrechbar ist, oder ob die fahraufgabenfremde Aktivität schwer unterbrechbar ist. So ist beispielsweise ein Spiel, das pausiert werden kann, als leicht unterbrechbar einzustufen, wohingegen das Schreiben einer Textnachricht als schwer unterbrechbar einzustufen ist, da hierbei oftmals eine kognitive und/oder visuelle Vereinnahmung des Fahrers durch die fahraufgabenfremde Aktivität vorliegt.

Ist die fahraufgabenfremde Aktivität leicht zu unterbrechen, kann entweder der Fahrer in einem Prozessschritt 380 über eine Wiederfreigabe der fahraufgabenfremden Aktivität zu einem späteren Zeitpunkt informiert werden, oder es kann ein Prozessschritt 390 folgen, bei dem aufgrund einer Nichtigkeit der fahraufgabenfremden Aktivität keine Handlung durchgeführt wird.

Ist die fahraufgabenfremde Aktivität schwer zu unterbrechen, kann dem Fahrer in einem Prozessschritt 399 die Möglichkeit geboten werden, die fahraufgabenfremde Aktivität in einem alternativen Ausführungsmodus wiederfreizugeben.

Fig. 4 zeigt ein Ablaufdiagramm eines Ausführungsbeispiels eines Verfahrens 400 zum Klassifizieren einer fahraufgabenfremden Aktivität eines Fahrers hinsichtlich einer Unterbrechbarkeit der fahraufgabenfremden Aktivität bei einer Übernahmeaufforderung der Fahraufgabe sowie ein anschließendes Verfahren 460 zur Wiederfreigabe einer fahraufgabenfremden Aktivität nach einer Unterbrechung der fahraufgabenfremden Aktivität aufgrund einer Übernahmeaufforderung der Fahraufgabe gemäß einem Ausführungsbeispiel. Hierbei können die Verfahren 400 und 460 unter Verwendung der in Fig. 1 vorgestellten Vorrichtung zum Klassifizieren einer fahraufgabenfremden Aktivität eines Fahrers hinsichtlich einer Unterbrechbarkeit der fahraufgabenfremden Aktivität bei einer Übernahmeaufforderung der Fahraufgabe sowie der Vorrichtung zur Wiederfreigabe einer fahraufgabenfremden Aktivität nach einer Unterbrechung der fahraufgabenfremden Aktivität aufgrund einer Übernahmeaufforderung der Fahraufgabe ausgeführt werden.

Das Verfahren 400 weist zunächst einen Schritt 410 auf, bei dem ein Detektionssignal und ein erstes Positionssignal von einer Fahrzeuginsassenüberwachungseinrichtung eines Fahrzeugs eingelesen werden, wobei das Detektionssignal ein detektiertes Objekt repräsentiert, das einer fahraufgabenfremden Aktivität des Fahrers dient, und wobei das erste Positionssignal eine erste Position des detektierten Objekts repräsentiert. In einem darauffolgen Schritt 420 wird ein Übernahmeaufforderungssignal empfangen, wobei das Übernahmeaufforderungssignal eine Aufforderung des Fahrers zur Übernahme der Fahraufgabe repräsentiert. Ansprechend auf den Schritt 420 weist das Verfahren 400 einen Schritt 430 auf, bei dem eine zweite Position des detektierten Objekts unter Verwendung eines zweiten Positionssignals ermittelt wird, wobei das zweite Positionssignal eine endgültige Position des Objekts repräsentiert, bevor der Fahrer die Fahraufgabe übernimmt und die fahraufgabenfremde Aktivität unterbricht. In einem Schritt 440 des Verfahrens 400 wird ein Unterbrechbarkeitslevel in Hinblick auf eine Unterbrechbarkeit der fahraufgabenfremden Aktivität bestimmt, wobei der Unterbrechbarkeitslevel einen Grad einer visuellen und/oder kognitiven Vereinnahmung des Fahrers durch die fahraufgabenfremde Aktivität repräsentiert. Schließlich weist das Verfahren einen Schritt 450 auf, bei dem eine Wahrscheinlichkeit einer Ablenkung des Fahrers durch die klassifizierte fahraufgabenfremde Aktivität berechnet wird, wobei die Wahrscheinlichkeit unter Verwendung einer vorherigen Wahrscheinlichkeit basierend auf einem bestimmten Unterbrechbarkeitslevel der fahraufgabenfremden Aktivität, bevor der Fahrer die Fahraufgabe übernahm, sowie einer Analyse der Blick- und/oder Kopfrichtung des Fahrers, nachdem der Fahrer die Fahraufgabe übernommen hat, berechnet wird.

Gemäß einem Ausführungsbeispiel wird insbesondere der Schritt 410 und/oder der Schritt 430 wiederholt ausgeführt.

An das Verfahren 400 schließt sich gemäß einem Ausführungsbeispiel das Verfahren 460 an, dass ebenfalls die Schritte 410, 420, 430, 440 und 450 aufweist. Das Verfahren 460 weist schließlich einen Schritt 465 auf, bei dem ein Informationssignal ausgegeben wird, wobei das Informationssignal eine Information zu einer zeitlichen und/oder lokalen Wiederfreigabe der fahraufgabenfremden Aktivität repräsentiert.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (400) zum Klassifizieren einer fahraufgabenfremden Aktivität eines Fahrers (215) hinsichtlich einer Unterbrechbarkeit der fahraufgabenfremden Aktivität bei einer Übernahmeaufforderung der Fahraufgabe bei einem automatisierten und/oder hochautomatisierten Fahren, wobei das Verfahren (400) die folgenden Schritte aufweist:

   Einlesen (410) eines Detektionssignals (118) und eines ersten Positionssignals (120) von einer Fahrzeuginsassenüberwachungseinrichtung (106) eines Fahrzeugs (104), wobei das Detektionssignal (118) ein detektiertes Objekt (220) repräsentiert, das einer fahraufgabenfremden Aktivität des Fahrers (215) dient, und wobei das erste Positionssignal (120) eine erste Position (225) des detektierten Objekts (220) repräsentiert;

   Empfangen (420) eines Übernahmeaufforderungssignals (124), wobei das Übernahmeaufforderungssignal (124) eine Aufforderung des Fahrers (215) zur Übernahme der Fahraufgabe repräsentiert;

   ansprechend auf den Schritt (420) des Empfangens, Ermitteln (430) einer zweiten Position des detektierten Objekts (220) unter Verwendung eines zweiten Positionssignals (126), wobei das zweite Positionssignal (126) eine endgültige Position (230) des Objekts (220) repräsentiert und einen Interessenbereich (230) definiert, bevor der Fahrer (215) die Fahraufgabe übernimmt und die fahraufgabenfremde Aktivität unterbricht und wobei die fahraufgabenfremde Aktivität des Fahrers (215) unter Verwendung der Positionen (225, 230) des Objekts (220) und/oder von ermittelten Blick- und/oder Kopfrichtungen des Fahrers (215) in den Interessenbereich (230) klassifiziert wird; und

   anschließend an den Schritt (430) des Ermittelns, Bestimmen (440) eines Unterbrechbarkeitslevels (132) in Hinblick auf eine Unterbrechbarkeit der fahraufgabenfremden Aktivität, wobei der Unterbrechbarkeitslevel (132) unter Verwendung eines mathematischen Modells bestimmt wird, wobei der Unterbrechbarkeitslevel (132) einen Grad einer visuellen und/oder kognitiven Vereinnahmung des Fahrers (215) durch die fahraufgabenfremde Aktivität repräsentiert, **dadurch gekennzeichnet, dass**

   ein Schritt (450) des Berechnens einer Wahrscheinlichkeit einer Ablenkung des Fahrers (215) durch die klassifizierte fahraufgabenfremde Aktivität vorgesehen ist, wobei die Wahrscheinlichkeit unter Verwendung einer vorherigen Wahrscheinlichkeit basierend auf dem bestimmten Unterbrechbarkeitslevel (132) der fahraufgabenfremden Aktivität, bevor der Fahrer (215) die Fahraufgabe übernahm, sowie einer Analyse der Blick- und/oder Kopfrichtung des Fahrers (215), nachdem der Fahrer (215) die Fahraufgabe übernommen hat, berechnet wird.

2. Verfahren (400) gemäß Anspruch 1, bei dem im Schritt (410) des Einlesens das Detektionssignal (118) und/oder das erste Positionssignal (120) und/oder das erste Blickrichtungssignal (122) von einer Kameraeinheit (106) eingelesen wird, wobei im Schritt (430) des Ermittelns das zweite Positionssignal (126) und/oder das zweite Blickrichtungssignal (128) ebenfalls von der Kameraeinheit (106) eingelesen wird.

3. Verfahren (400) gemäß einem der vorangegangenen Ansprüche, bei dem der Unterbrechbarkeitslevel (132) eine Unterbrechbarkeit der fahraufgabenfremden Aktivität von einer Leichtunterbrechungsstufe, die eine leichte Unterbrechbarkeit der fahraufgabenfremden Aktivität repräsentiert, bis zu einer Schwerunterbrechbarkeitsstufe, die eine schwere Unterbrechbarkeit der fahraufgabenfremden Aktivität repräsentiert, definiert.

4. Verfahren gemäß Anspruch 3, bei dem im Schritt (440) des Bestimmens als fahraufgabenfremde Aktivität ein Spiel, das pausiert werden kann, als in eine Leichtunterbrechungsstufe eingestuft wird und/oder als fahraufgabenfremde Aktivität ein Schreiben einer Textnachricht in eine Schwerunterbrechbarkeitsstufe eingestuft wird.

5. Verfahren (400) gemäß einem der vorangegangenen Ansprüche, bei dem der Schritt (410) des Einlesens und/oder der Schritt (420) des Empfangens und/oder der Schritt (430) des Ermittelns und/oder der Schritt (440) des Bestimmens und/oder der Schritt (450) des Berechnens auf einer fahrzeugexternen Recheneinheit und/oder auf einer im Fahrzeug (104) verbauten Recheneinheit ausgeführt wird.

6. Verfahren (400) gemäß Anspruch 5, wobei der Schritt (410) des Einlesens und/oder der Schritt (430) des Ermittelns wiederholt ausgeführt wird, wobei zwischen dem wiederholt ausgeführten Schritt (410) des Einlesens und/oder dem wiederholt ausgeführten Schritt (430) des Ermittelns die Wahrscheinlichkeit der Ablenkung des Fahrers (215) durch die klassifizierte fahraufgabenfremde Aktivität berechnet wird.

7. Verfahren (460) zur Wiederfreigabe einer fahraufgabenfremden Aktivität nach einer Unterbrechung der fahraufgabenfremden Aktivität aufgrund einer Übernahmeaufforderung der Fahraufgabe, wobei das Verfahren (460) die folgenden Schritte aufweist:

    die Schritte (410, 420, 430, 440, 450) eines Verfahrens (400) gemäß einem der Ansprüche 1 bis 8; und
    Ausgeben (465) eines Informationssignals (138), wobei das Informationssignal (138) eine Information zu einer zeitlichen und/oder lokalen Wiederfreigabe der fahraufgabenfremden Aktivität repräsentiert.

8. Verfahren (460) gemäß Anspruch 7, bei dem im Schritt (465) des Ausgebens unter Verwendung des Informationssignals (138) ferner eine Wiederfreigabe einer fahraufgabenfremden Aktivität bereits während der manuellen Fahrt des Fahrzeugs (104) in einem alternativen Ausführungsmodus ermöglicht wird.

9. Vorrichtung (100, 102), die eingerichtet ist, um die Schritte (410, 420, 430, 440, 450, 465) eines der Verfahren (400, 460) gemäß den Ansprüchen 1 bis 7 in entsprechenden Einheiten (108, 110, 112, 114, 116, 136) auszuführen und/oder anzusteuern.

10. Computerprogramm, das dazu eingerichtet ist, die Schritte (410, 420, 430, 440, 450, 465) eines der Verfahren (400, 460) gemäß den Ansprüchen 1 bis 7 in entsprechenden Einheiten (108, 110, 112, 114, 116, 136) auszuführen und/oder anzusteuern.

11. Maschinenlesbares Speichermedium, auf dem das Computerprogramm nach Anspruch 10 gespeichert ist.

## Claims

1. Method (400) for classifying a non-driving activity of a driver (215) with regard to interruptibility of the non-driving activity in the event of a request to take over the driving task during automated and/or highly automated driving, wherein the method (400) has the following steps of:

    reading in (410) a detection signal (118) and a first position signal (120) from a vehicle occupant monitoring device (106) of a vehicle (104), wherein the detection signal (118) represents a detected object (220) which serves a non-driving activity of the driver (215), and wherein the first position signal (120) represents a first position (225) of the detected object (220);
    receiving (420) a take-over request signal (124), wherein the take-over request signal (124) represents a request for the driver (215) to take over the driving task;
    in response to the receiving step (420), ascertaining (430) a second position of the detected object (220) using a second position signal (126), wherein the second position signal (126) represents a final position (230) of the object (220) and defines an area of interest (230) before the driver (215) takes over the driving task and interrupts the non-driving activity, and wherein the non-driving activity of the driver (215) is classified using the positions (225, 230) of the object (220) and/or determined viewing and/or head directions of the driver (215) in the area of interest (230); and
    after the ascertaining step (430), determining (440) a level of interruptibility (132) with regard to interruptibility of the non-driving activity, wherein the level of interruptibility (132) is determined using a mathematical model, wherein the level of interruptibility (132) represents a degree of visual and/or cognitive appropriation of the driver (215) by the non-driving activity,

**characterized in that**
a step (450) of calculating a probability of the driver (215) being distracted by the classified non-driving activity is provided, wherein the probability is calculated using a previous probability based on the determined level of interruptibility (132) of the non-driving activity before the driver (215) took over the driving task and an analysis of the viewing and/or head direction of the driver (215) after the driver (215) has taken over the driving task.

2. Method (400) according to Claim 1, in which, in the reading-in step (410), the detection signal (118) and/or the first position signal (120) and/or the first viewing direction signal (122) is/are read in from a camera unit (106), wherein, in the ascertaining step (430), the second position signal (126) and/or the second viewing direction signal (128) is/are also read in from the camera unit (106).

3. Method (400) according to one of the preceding claims, in which the level of interruptibility (132) defines interruptibility of the non-driving activity from a slight degree of interruption, which represents slight interruptibility of the non-driving activity, to a severe degree of interruptibility, which represents severe interruptibility of the non-driving activity.

4. Method according to Claim 3, in which, in the determining step (440), a game which can be paused, as a non-driving activity, is classified as a slight degree of interruption and/or writing of a text message, as a non-driving activity, is classified as a severe degree of interruptibility.

5. Method (400) according to one of the preceding claims, in which the reading-in step (410) and/or the receiving step (420) and/or the ascertaining step (430) and/or the determining step (440) and/or the calculating step (450) is/are performed on a computing unit outside the vehicle and/or on a computing unit installed in the vehicle (104).

6. Method (400) according to Claim 5, wherein the reading-in step (410) and/or the ascertaining step (430) is/are performed repeatedly, wherein the probability of the driver (215) being distracted by the classified non-driving activity is calculated between the repeatedly performed reading-in step (410) and/or the repeatedly performed ascertaining step (430).

7. Method (460) for re-enabling a non-driving activity after an interruption of the non-driving activity on account of a request to take over the driving task, wherein the method (460) has the following steps:

the steps (410, 420, 430, 440, 450) of a method (400) according to one of Claims 1 to 8; and outputting (465) an information signal (138), wherein the information signal (138) represents information relating to temporal and/or local re-enabling of the non-driving activity.

8. Method (460) according to Claim 7, in which, in the outputting step (465), it is also possible to re-enable a non-driving activity already during the manual journey of the vehicle (104) in an alternative execution mode using the information signal (138).

9. Device (100, 102) which is configured to perform and/or control the steps (410, 420, 430, 440, 450, 465) of one of the methods (400, 460) according to Claims 1 to 7 in corresponding units (108, 110, 112, 114, 116, 136).

10. Computer program which is configured to perform and/or control the steps (410, 420, 430, 440, 450, 465) of one of the methods (400, 460) according to Claims 1 to 7 in corresponding units (108, 110, 112, 114, 116, 136).

11. Machine-readable storage medium on which the computer program according to Claim 10 is stored.

**Revendications**

1. Procédé (400) de classification d'une activité d'un conducteur (215) étrangère à une tâche de conduite en ce qui concerne une interruptibilité de l'activité étrangère à une tâche de conduite dans le cas d'une demande de prise en charge de la tâche de conduite lors d'une conduite automatisée et/ou hautement automatisée, le procédé (400) comprenant les étapes suivantes :

la lecture (410) d'un signal de détection (118) et d'un premier signal de position (120) provenant d'un dispositif de surveillance des occupants (106) d'un véhicule (104), le signal de détection (118) représentant un objet détecté (220) qui sert à une activité du conducteur (215) étrangère à une tâche de conduite, et le premier signal de position (120) représentant une première position (225) de l'objet détecté (220) ;
la réception (420) d'un signal de demande de prise en charge (124), le signal de demande de prise en charge (124) représentant une demande du conducteur (215) pour prendre en charge la tâche de conduite ;
en réponse à l'étape (420) de réception, l'identification (430) d'une deuxième position de l'objet détecté (220) en utilisant un deuxième signal de position (126), le deuxième signal de position (126) représentant une position finale (230) de l'objet (220) et définissant une zone d'intérêt (230), avant que le conducteur (215) ne prenne en charge la tâche de conduite et n'interrompe l'activité étrangère à une tâche de conduite, et l'activité du conducteur (215) étrangère à une tâche de conduite étant classifiée en utilisant les positions (225, 230) de l'objet (220) et/ou des directions de regard et/ou de tête identifiées du conducteur (215) dans la zone d'intérêt (230) ; et à la suite de l'étape (430) d'identification, la détermination (440) d'un niveau d'interruptibilité (132) en ce qui concerne une interruptibilité de l'activité étrangère à une tâche de conduite, le niveau d'interruptibilité (132) étant déterminé en utilisant un modèle mathématique, le niveau d'interruptibilité (132) représentant un degré d'accaparation visuelle et/ou cognitive du conducteur (215) par l'activité étrangère à une tâche de conduite,

**caractérisé en ce qu'**il est prévu une étape (450) de calcul d'une probabilité d'une distraction du conducteur (215) par l'activité étrangère à une tâche de conduite classifiée, la probabilité étant calculée en utilisant une probabilité antérieure basée sur le niveau d'interruptibilité déterminé (132) de l'activité étrangère à une tâche de conduite, avant que le conducteur (215) ne prenne en charge la tâche de conduite, ainsi qu'une analyse de la direction de regard et/ou de tête du conducteur (215) après que le conducteur (215) a pris en charge la tâche de conduite.

2. Procédé (400) selon la revendication 1, dans lequel, lors de l'étape (410) de lecture, le signal de détection (118) et/ou le premier signal de position (120) et/ou le premier signal de direction de regard (122) sont lus par une unité de caméra (106), et dans lequel, lors de l'étape (430) d'identification, le deuxième signal de position (126) et/ou le deuxième signal de direction de regard (128) sont également lus par l'unité de caméra (106).

3. Procédé (400) selon l'une quelconque des revendications précédentes, dans lequel le niveau d'interruptibilité (132) définit une interruptibilité de l'activité étrangère à une tâche de conduite allant d'un niveau de légère interruptibilité, qui représente une légère interruptibilité de l'activité étrangère à une tâche de conduite, jusqu'à un niveau de forte interruptibilité, qui représente une forte interruptibilité de l'activité étrangère à une tâche de conduite.

4. Procédé selon la revendication 3, dans lequel, lors de l'étape (440) de détermination, une activité étrangère à une tâche de conduite telle qu'un jeu, qui peut être mis en pause, est classée à un niveau de légère interruptibilité et/ou une activité étrangère à une tâche de conduite, telle que l'écriture d'un message texte, est classée à un niveau de forte interruptibilité.

5. Procédé (400) selon l'une quelconque des revendications précédentes, dans lequel l'étape (410) de lecture et/ou l'étape (420) de réception et/ou l'étape (430) d'identification et/ou l'étape (440) de détermination et/ou l'étape (450) de calcul sont exécutées sur une unité de calcul externe au véhicule et/ou sur une unité de calcul installée dans le véhicule (104).

6. Procédé (400) selon la revendication 5, dans lequel l'étape (410) de lecture et/ou l'étape (430) d'identification sont exécutées de manière répétée, la probabilité de distraction du conducteur (215) par l'activité étrangère à une tâche de conduite classifiée étant calculée entre l'étape (410) de lecture exécutée de manière répétée et/ou l'étape (430) d'identification exécutée de manière répétée.

7. Procédé (460) de réautorisation d'une activité étrangère à une tâche de conduite après une interruption de l'activité étrangère à une tâche de conduite en raison d'une demande de prise en charge de la tâche de conduite, le procédé (460) comprenant les étapes suivantes :

les étapes (410, 420, 430, 440, 450) d'un procédé (400) selon l'une quelconque des revendications 1 à 8 ; et
la fourniture (465) d'un signal d'information (138), le signal d'information (138) représentant une information relative à une réautorisation temporelle et/ou locale de l'activité étrangère à une tâche de conduite.

8. Procédé (460) selon la revendication 7, dans lequel, lors de l'étape (465) de fourniture, une réautorisation d'une activité étrangère à une tâche de conduite est en outre déjà rendue possible, dans une variante de réalisation, pendant la conduite manuelle du véhicule (104) au moyen du signal d'information (138).

9. Dispositif (100, 102), conçu pour exécuter et/ou commander les étapes (410, 420, 430, 440, 450, 465) de l'un des procédés (400, 460) selon les revendications 1 à 7 dans des unités correspondantes (108, 110, 112, 114, 116, 136).

10. Programme informatique, conçu pour exécuter et/ou commander les étapes (410, 420, 430, 440, 450, 465) de l'un des procédés (400, 460) selon les revendications 1 à 7 dans des unités correspondantes (108, 110, 112, 114, 116, 136).

11. Support de stockage lisible par machine, sur lequel est stocké le programme informatique selon la re-

vendication 10.

**Fig. 1**

# Fig. 2

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9690292 B1
- WO 2017118789 A1